# DEMANDE DE BREVET EUROPEEN

(11) **EP 1 852 624 A1**
(43) Date de publication de la demande: **07.11.2007**
(21) Numéro de dépôt: 07301008.4
(22) Date de dépôt: 30.04.2007
(51) Int. Cl.: F16D 27/06

(54) **Embrayage électromagnétique à bobine tournante.**

(30) Priorité: 02.05.2006 FR 0651546
(71) Demandeur: PEUGEOT CITROËN AUTOMOBILES S.A., 78140 Velizy Villacoublay (FR)
(72) Inventeur: Poinsignon, Jean-Marc, 57220, Fouligny (FR)
(74) Mandataire: Vigand, Régis Louis Michel

(57) **Abrégé**

- L'embrayage comporte une platine d'embrayage fixe (6) reliée à une source motrice, une platine d'embrayage mobile (5), solidaire d'un arbre de sortie (1), un électroaimant qui provoque, lorsqu'il est alimenté en courant électrique, l'attraction de la platine mobile (5) contre la platine fixe (6) afin de transmettre le mouvement de la source motrice à l'arbre de sortie (1).

- Les platines d'embrayage fixe (6) et mobile (5) constituent elles-mêmes les pièces polaires en matériau magnétique de l'électroaimant, et le bobinage (2) de l'électroaimant est placé dans la platine mobile (5).

- Embrayages électromagnétiques. Moteurs réducteurs à embrayages électromagnétiques. Commandes d'équipements automobiles réglables. Véhicules automobiles.

## Description

La présente invention concerne un embrayage électromagnétique comportant une bobine tournante.

Un embrayage permet d'établir, de modifier ou d'interrompre le couplage entre deux axes dans la transmission d'un mouvement mécanique. Il est électromagnétique lorsqu'il utilise un électroaimant pour provoquer ou rompre à volonté la liaison mécanique entre les deux axes.

Des embrayages électromagnétiques sont notamment utilisés dans les moteurs réducteurs ou motoréducteurs, qui permettent de transmettre, à partir d'un seul actionneur, un couple moteur vers plusieurs sorties mécaniques.

De plus en plus de fonctions dans un véhicule automobile sont commandées par le conducteur, un passager ou un ordinateur de bord, et comprennent des motoréducteurs. Il en est ainsi, par exemple, des nombreux réglages des sièges, de la climatisation, de l'ouverture du coffre du véhicule, du fonctionnement des lave-glaces, etc.

Un embrayage électromagnétique classique, largement rencontré dans l'art antérieur, est composé d'un porte-bobine équipé de sa bobine et d'un câble de raccordement, d'un rotor, solidaire du porte-bobine, d'une garniture de friction intégrée au rotor, d'un moyeu, rentrant ou sortant, non solidaire des éléments précédents, d'une armature solidaire du moyeu. Le porte-bobine est monté fixe sur le bâti de la machine motrice et le rotor est monté sur l'arbre menant. Le moyeu est monté sur l'arbre mené, et un certain jeu, appelé « entrefer », doit être respecté au montage entre la garniture de friction et l'armature. Lorsqu'on alimente la bobine avec un courant continu, le champ électromagnétique généré attire l'armature vers la garniture de friction.

Le rotor, en mouvement sur la machine motrice, peut alors entraîner en rotation le moyeu, et donc l'arbre mené.

Lorsqu'on arrête d'alimenter la bobine, le champ électromagnétique disparaît, l'armature se retrouve dans sa position initiale plaquée contre le moyeu, et l'arbre mené est désolidarisé de l'arbre menant.

Par rapport à un embrayage centrifuge, un embrayage électromagnétique présente le grand avantage d'être capable de délivrer un couple à vitesse nulle (couple de maintien), alors qu'un embrayage centrifuge a, par définition, besoin d'une vitesse de rotation.

On a déjà cherché à rendre plus compact l'architecture de tels systèmes d'embrayage, notamment pour incorporer des fonctions nouvelles dans ces derniers.

Selon le brevet des Etats-Unis d'Amérique US 6 012 563, on connaît un embrayage électromagnétique du type à bobine tournante, dans lequel on a cherché à réduire la dimension dans la direction axiale. A l'intérieur de la circonférence interne d'un renflement de boîtier d'un compresseur, il est prévu un mécanisme coulissant d'alimentation en courant, qui présente des bagues collectrices et des balais coulissants en contact avec les bagues collectrices. La bobine électromagnétique est alimentée en courant par l'intermédiaire de ce mécanisme coulissant d'alimentation en courant, et du fait que ce dernier est disposé dans le renflement coulissant, il se forme un passage pour l'alimentation en courant sans augmentation de la dimension axiale de l'embrayage.

On connaît également, selon le brevet des Etats-Unis d'Amérique US 6 169 347 B1, un embrayage électromagnétique du type à bobine tournante, avec une bobine électromagnétique qui est disposée dans un rotor et isolée électriquement de ce dernier. Une bague collectrice est supportée par un rotor via un support de bague, et tourne avec le rotor. Un balai est supporté par une partie en bossage de compresseur via un support de balai, et fournit un courant électrique à la bague collectrice. Une diode est logée dans le support de balai ou le support de bague, et absorbe une surtension qui est induite lorsque la bobine électromagnétique est désexcitée. L'élément d'absorption de la surtension ne vient pas augmenter la dimension axiale de l'embrayage électromagnétique.

Dans ces solutions de l'art antérieur mentionnées ci-dessus, les embrayages sont constitués d'un grand nombre de pièces, même si celles-ci et les mécanismes supplémentaires prévus ne provoquent pas d'augmentation de la longueur axiale des embrayages.

Le but de la présente invention est de concevoir une nouvelle architecture d'embrayage électromagnétique, qui comporte un nombre de pièces plus petit que celui des architectures des embrayages électromagnétiques de l'art antérieur.

En d'autres termes, le but de la présente invention est de concevoir une nouvelle architecture simplifiée d'embrayage électromagnétique à bobine tournante.

C'est aussi un but de la présente invention de miniaturiser de tels types d'embrayage, d'en réduire les coûts de fabrication et de montage, d'en augmenter la fiabilité.

Pour atteindre ces buts, la présente invention réalise un nouvel embrayage électromagnétique, qui comporte une platine d'embrayage fixe reliée à une source motrice, une platine d'embrayage mobile, solidaire d'un arbre de sortie, un électroaimant qui provoque, lorsqu'il est alimenté en courant électrique, l'attraction de la platine mobile contre la platine fixe afin de transmettre le mouvement de la source motrice à l'arbre de sortie. Dans ce nouvel embrayage, les platines d'embrayage fixe et mobile constituent elles-mêmes les pièces polaires en matériau magnétique de l'électroaimant, et le bobinage de l'électroaimant est placé dans la platine mobile.

Selon le mode de réalisation préféré de l'invention, le bobinage présente une de ses faces noyée dans le corps de la platine mobile, l'autre face dudit bobinage étant en regard de la surface de contact de la platine d'embrayage fixe.

Ainsi, dans un telle architecture d'embrayage électromagnétique, la fermeture du circuit magnétique de l'électroaimant et l'embrayage du mécanisme sont assurés par les mêmes pièces mécaniques.

En position d'embrayage, la bobine tourne avec la platine d'embrayage mobile et il faut simultanément l'alimenter en courant électrique à partir d'une source fixe, afin de permettre l'activation de l'embrayage. Cette difficulté est résolue par la présente invention.

Pour y parvenir, le bobinage est alimenté en courant électrique par l'intermédiaire de balais, solidaires d'un élément fixe, en contact glissant avec des collecteurs, solidaires de la platine d'embrayage mobile.

De préférence, ces collecteurs sont des bandes conductrices réparties sur la périphérie de la platine d'embrayage mobile.

De préférence également, les balais sont fixés sur la périphérie interne d'un carter de l'embrayage, en contact glissant avec les collecteurs.

De préférence aussi, les collecteurs sont des bandes de cuivre.

La platine d'embrayage fixe présente, de préférence, une de ses faces noyée dans une roue d'entrée motrice et l'autre face en regard de la platine d'embrayage mobile.

En variante, on peut réaliser un dispositif d'embrayages électromagnétiques à deux embrayages selon la présente invention, les deux embrayages étant identiques, symétriques, situés de part et d'autre d'une roue d'entrée motrice par laquelle la puissance est amenée et chaque embrayage étant conforme aux principes et caractéristiques de l'invention exposés ci-dessus.

L'invention fournit également un moteur réducteur ou motoréducteur destiné à répartir une puissance motrice entre au moins deux sorties, comprenant une entrée par laquelle la puissance motrice est amenée, et au moins deux axes de sortie auxquels des parties ou la totalité de la puissance motrice sont disponibles, un embrayage électromagnétique par axe de sortie, chaque embrayage électromagnétique étant conforme aux principes et caractéristiques de la présente invention exposés ci-dessus.
D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :

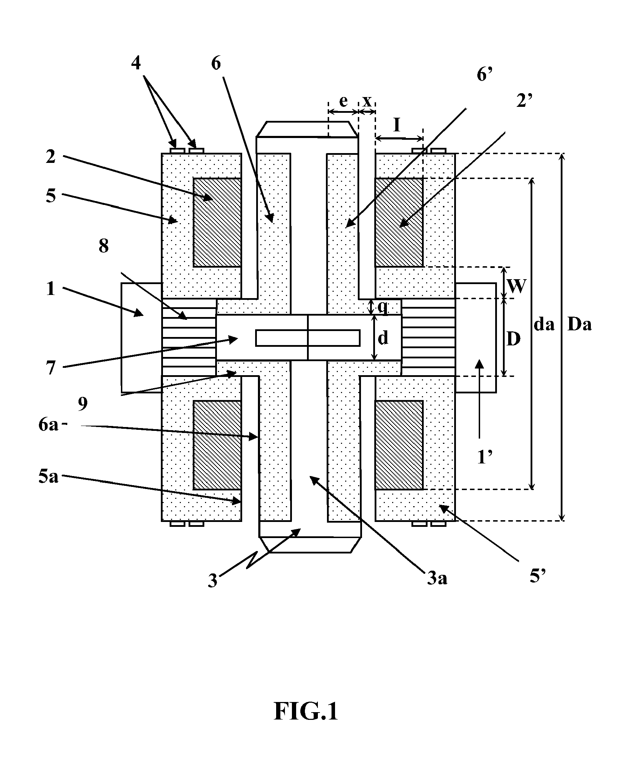

- la figure 1, unique, est une représentation schématique du mécanisme d'embrayage, selon la présente invention.

En se référant à la figure, une source motrice est constituée par une roue motrice, référencée 3, formant platine d'embrayage fixe (fixe en translation) par laquelle une puissance mécanique motrice d'entrée est amenée (puissance d'un moteur, par exemple). La roue motrice 3 est montée sur un arbre 7, de diamètre « d », qui n'est pas solidaire en rotation de la sortie mécanique de l'embrayage, référencée 1. Sur une face latérale de cette roue motrice 3 est montée fixe une platine d'embrayage 6. Une partie complémentaire 5 (désignée « platine d'embrayage mobile » dans la suite du texte) est montée solidaire en rotation de l'arbre de sortie 1. Cette platine d'embrayage mobile 5 peut venir en contact, par sa surface latérale 5a, avec la surface latérale 6a en regard de la platine fixe d'embrayage 6, de façon à assurer la transmission mécanique du mouvement de la roue motrice 3 vers l'arbre de sortie 1 par l'intermédiaire d'un moyeu 8 de diamètre « D », solidaire en rotation de l'arbre de sortie 1, sur lequel est monté la platine mobile 5. Ainsi, la platine mobile 5 est solidaire en rotation du moyeu 8, donc de l'arbre de sortie 1, mais peut se déplacer d'une distance « x » en translation par rapport au moyeu 8.

Comme on peut le voir sur le dessin de la figure unique, le dispositif est symétrique, avec deux sorties situées de part et d'autre de la roue motrice 3. La description qui suit pour l'une des deux sorties (à gauche sur la figure) vaut mutatis mutandis pour le mécanisme d'embrayage identique et symétrique qui est relatif à l'autre sortie (à droite sur la figure). L'embrayage symétrique porte des références qui, lorsqu'elles figurent sur le dessin, sont des références identiques à celles de l'embrayage décrit auxquelles on a ajouté « ' ».

Le dispositif comprend un bobinage d'excitation 2, placé dans la platine mobile 5, solidaire en rotation de l'axe de sortie 1. L'alimentation électrique de ce bobinage 2 provoque la génération d'une force d'attraction des pièces polaires constituées par la platine d'embrayage fixe 6 et la platine d'embrayage mobile 5. La platine d'embrayage fixe 6 étant immobilisée en translation, c'est la platine mobile 5 qui se déplace et vient contre la platine 6 avec une force variable en fonction de l'intensité du courant qui alimente la bobine 2.

La course de ce déplacement est indiquée sur la figure par la distance « x ». Le bobinage 2 est noyé dans la platine mobile 5, et présente une forme générale annulaire de diamètre extérieur « da », de rayon intérieur supérieur au rayon de l'alésage de la platine mobile d'une valeur de « W », et d'une largeur ou épaisseur « I ».

La platine d'embrayage fixe 6 est noyée dans une face latérale de la roue motrice 3. Elle présente une forme générale sensiblement cylindrique, de diamètre extérieur sensiblement égal au diamètre extérieur « Da » de la platine mobile 5, et une épaisseur « e », qui laisse une partie médiane 3a de roue motrice 3 suffisamment large pour transmettre les efforts mécaniques avec résistance. La platine d'embrayage 6 est prolongée par un manchon 9 monobloc d'épaisseur radiale « q » qui positionne axialement la roue motrice 3 et permet de créer le jeu « x » dans lequel se développe le mouvement de translation de la platine mobile 5 lors du couplage et du découplage de l'embrayage.

Pour alimenter électriquement le bobinage 2, il est prévu des collecteurs 4 répartis sur la périphérie de la platine mobile, qui reçoivent le courant électrique de balais conducteurs (non représentés), montés sur la périphérie interne du carter (non représenté) du dispositif d'embrayage de l'invention. Ces balais sont des pièces fixes qui assurent par contact glissant avec les collecteurs 4 la liaison électrique entre l'organe mobile 5 et le contact fixe solidaire du carter. Les balais frottent en permanence sur les collecteurs, formés, de préférence, de bandes de cuivre collées sur la périphérie du circuit magnétique rotatif constitué par la platine mobile 5.

Ces balais sont soumis à moins de contraintes que les balais utilisés, par exemple, dans des moteurs à courant continu, du fait qu'ils ne subissent pas de commutations répétées.

La description ci-dessus d'un mode de réalisation de l'invention est donnée à titre d'exemple. Des variantes et modifications peuvent être apportées sans sortir du cadre de l'invention. Par exemple, la localisation des collecteurs peut être faite dans tous les emplacements où les balais peuvent rester en contact à tout moment de la rotation de la platine mobile, afin d'alimenter le moyen électromagnétique de couplage.

En se référant encore à la figure unique, l'invention réalise un dispositif d'embrayages électromagnétiques à deux embrayages, les deux embrayages étant identiques, symétriques, situés de part et d'autre d'une roue d'entrée motrice 3 par laquelle la puissance est amenée et chaque embrayage étant conforme aux principes et caractéristiques de l'invention exposés ci-dessus.

Le dispositif à deux embrayages électromagnétiques comporte une roue d'entrée 3 motrice, une platine d'embrayage fixe 6, 6', sur chacune des deux faces latérales de la roue motrice 3, une platine d'embrayage mobile 5, 5', disposée en regard de chaque platine d'embrayage fixe 6, 6', respectivement, et solidaire d'un arbre de sortie 1, 1', respectivement. Le dispositif comporte deux électroaimants, chacun provoquant, lorsqu'il est alimenté en courant électrique, l'attraction d'une platine mobile 5, 5', contre la platine fixe 6, respectivement 6', correspondante, afin de transmettre le mouvement de la source motrice aux arbres de sortie 1, respectivement 1'. Les platines d'embrayage fixe 6, 6', et mobile 5, 5', constituent elles-mêmes les pièces polaires en matériau magnétique des deux électroaimants, et le bobinage 2, 2', de chaque électroaimant est placé dans la platine d'embrayage mobile 5, 5', correspondante.

Dans une réalisation alternative, le dispositif d'embrayages électromagnétiques comporte une roue d'entrée 3 motrice, deux platines d'embrayage 6, 6' sur chacune des deux faces latérales de ladite roue motrice 3 tournant autour d'un axe 7, les platines d'embrayage 6, 6' étant mobiles en translation selon l'axe 7 par rapport à la roue d'entrée 3, une platine d'embrayage fixe 5, 5' disposée en regard de chaque platine d'embrayage mobile 6, 6' et solidaire d'un arbre de sortie 1, 1', deux électroaimants, chacun provoquant, lorsqu'il est alimenté en courant électrique, l'attraction d'une platine mobile 6, 6' contre la platine fixe 5, 5' correspondante afin de transmettre le mouvement de la source motrice aux arbres de sortie 1, 1'. Les platines d'embrayage fixe 5, 5' et mobile 6, 6' constituent elles-mêmes les pièces polaires en matériau magnétique des deux électroaimants et le bobinage 2, 2' de chaque électroaimant est placé dans la platine d'embrayage fixe 5, 5' correspondante.

Dans tous les cas de réalisation selon le principe de l'invention ci-dessus, la solution technique retenue permet de réduire le nombre de pièces, et par conséquent les coûts et la masse totale du dispositif d'embrayages.

## Revendications

1. Dispositif d'embrayages électromagnétiques, qui comporte une roue d'entrée (3) motrice, une platine d'embrayage fixe (6, 6') sur chacune des deux faces latérales de ladite roue motrice (3), une platine d'embrayage mobile (5, 5') disposée en regard de chaque platine d'embrayage fixe (6, 6') et solidaire d'un arbre de sortie (1, 1'), deux électroaimants, chacun provoquant, lorsqu'il est alimenté en courant électrique, l'attraction d'une platine mobile (5, 5') contre la platine fixe (6, 6') correspondante afin de transmettre le mouvement de la source motrice aux arbres de sortie (1, 1'), **caractérisé en ce que** lesdites platines d'embrayage fixe (6, 6') et mobile (5, 5') constituent elles-mêmes les pièces polaires en matériau magnétique des deux électroaimants et **en ce que** le bobinage (2, 2') de chaque électroaimant est placé dans la platine d'embrayage mobile (5, 5') correspondante.

2. Dispositif d'embrayages électromagnétiques selon la revendication 1, **caractérisé en ce que** le bobinage (2) présente une de ses faces noyée dans le corps de la platine mobile, l'autre face dudit bobinage (2) étant en regard de la surface de contact de la platine d'embrayage fixe (6).

3. Dispositif d'embrayages électromagnétiques selon l'une quelconque des revendications 1 et 2, **caractérisé en ce que** le bobinage (2) est alimenté en courant électrique par l'intermédiaire de balais, solidaires d'un élément fixe, en contact glissant avec des collecteurs (4), solidaires de la platine d'embrayage mobile (5).

4. Dispositif d'embrayages électromagnétiques selon la revendication 3, **caractérisé en ce que** lesdits collecteurs (4) sont des bandes conductrices réparties sur la périphérie de la platine d'embrayage mobile (5).

5. Dispositif d'embrayages électromagnétiques selon l'une quelconque des revendication 3 et 4, **caractérisé en ce que** lesdits balais sont fixés sur la périphérie interne d'un carter de l'embrayage, en contact glissant avec lesdits collecteurs (4).

6. Dispositif d'embrayages électromagnétiques selon l'une quelconque des revendications 3 à 5, **caractérisé en ce que** lesdits collecteurs (4) sont des bandes de cuivre.

7. Dispositif d'embrayages électromagnétiques selon l'une quelconque des revendications 1 à 6, **caractérisé en ce que** la platine d'embrayage fixe (6) présente une de ses faces noyée dans une roue d'entrée motrice (3) et l'autre face en regard de la platine d'embrayage mobile (5).

8. Dispositif d'embrayages électromagnétiques, qui comporte une roue d'entrée (3) motrice, deux platines d'embrayage (6, 6') sur chacune des deux faces latérales de ladite roue motrice (3) tournant autour d'un axe (7), les platines d'embrayage (6, 6') étant mobiles en translation selon l'axe (7) par rapport à la roue d'entrée (3), une platine d'embrayage fixe (5, 5') disposée en regard de chaque platine d'embrayage mobile (6, 6') et solidaire d'un arbre de sortie (1, 1'), deux électroaimants, chacun provoquant, lorsqu'il est alimenté en courant électrique, l'attraction d'une platine mobile (6, 6') contre la platine fixe (5, 5') correspondante afin de transmettre le mouvement de la source motrice aux arbres de sortie (1, 1'), **caractérisé en ce que** lesdites platines d'embrayage fixe (5, 5') et mobile (6, 6') constituent elles-mêmes les pièces polaires en matériau magnétique des deux électroaimants et **en ce que** le bobinage (2, 2') de chaque électroaimant est placé dans la platine d'embrayage fixe (5, 5') correspondante.

9. Motoréducteur destiné à répartir une puissance motrice entre au moins deux sorties, comprenant une entrée par laquelle la puissance motrice est amenée, et au moins deux axes de sortie auxquels des parties ou la totalité de la puissance motrice sont disponibles, un dispositif d'embrayages électromagnétiques selon l'une quelconque des revendications 1 à 8.

10. Dispositif de réglage de siège de véhicule automobile comprenant un dispositif d'embrayages électromagnétiques selon l'une quelconque des revendications 1 à 8 ou un motoréducteur selon la revendication 9.
